# EUROPEAN PATENT APPLICATION

(11) **EP 4 216 346 A1**
(43) Date of publication of application: **26.07.2023**
(21) Application number: 21931937.3
(22) Date of filing: 28.09.2021
(51) Int. Cl.: H01M 50/109

(54) **HOUSING ASSEMBLY FOR BATTERY, BATTERY, AND MATERIAL BELT**

(30) Priority: 28.04.2021 CN 202120907344 U
(71) Applicant: Zhuhai CosMX Battery Co., Ltd., Zhuhai, Guangdong 519100 (CN)
(72) Inventor: WEI, Zhida, Zhuhai, Guangdong 519180 (CN); PENG, Ning, Zhuhai, Guangdong 519180 (CN); XIE, Bin, Zhuhai, Guangdong 519180 (CN)
(74) Representative: Elzaburu S.L.P.
(86) International application number: PCT/CN2021/121140
(87) International publication number: WO 2022/227398

(57) **Abstract**

The present application provides a case component for a battery, a battery, and a material belt. The case component for the battery according to the present application for accommodating a battery cell includes a case body and a conductive element; the case body includes a bottom case and a top cover; an accommodating cavity is in the bottom case; one end of the bottom case has an opening that is in communication with the accommodating cavity; the battery cell is accommodated in the accommodating cavity of the bottom case; the top cover is disposed on the opening of the bottom case; the conductive element is disposed on the top cover by an insulating adhesive layer; and an edge of the conductive element is provided with at least one positioning gap. The present application provides a case component for a battery, a battery, and a material belt for at least solving the technical problems of difficult CCD visual positioning and inconvenient battery production in the production of batteries.

## Description

The present application claims priority to Chinese Patent Application No. 202120907344.6 filed with the China National Intellectual Property Administration on April 28, 2021 and entitled "Case Component for Battery, Battery, and Material Belt", which is incorporated in the present application by reference in its entirety.

### TECHNICAL FIELD

The present application relates to the field of battery manufacturing and, in particular, to a case component for a battery, a battery, and a material belt.

### BACKGROUND

Lithium batteries have the advantages of high energy density, high power, good safety, long cycle life, etc., and are widely used in the fields of communication, transportation, household appliances, etc., for supplying electrical energy to electrical equipments. With the development of battery technology, the market demand for batteries continues to increase, and meanwhile the requirements for companies that produce batteries continue to increase.

At present, when battery producers are producing batteries, battery top covers in case components are usually produced in single pieces, resulting in low production efficiency of batteries. Especially in button batteries, a conductive element is usually a circular sheet structure, and in the battery production process, after the circular conductive sheet is mounted on a battery body, the battery is kept horizontally placed on a workstation, so it is difficult to perform visual positioning on the placement angle of the battery. This results in very inconvenient production and detection in subsequent steps, and affects production efficiency and the quality of batteries.

Therefore, there is an urgent need to improve a case component for a battery, a battery, and a material belt, so as to make CCD visual positioning and battery production easy in the battery production process.

### SUMMARY

The present application provides a case component for a battery, a battery, and a material belt for at least solving the technical problems of difficult CCD visual positioning and inconvenient battery production in the production of batteries.

To achieve the above objectives, the present application provides a case component for a battery, a battery, and a material belt. A case component for a battery according to the present application for accommodating a battery cell includes a case body and a conductive element; the case body includes a bottom case and a top cover; an accommodating cavity is in the case body; one end of the bottom case has an opening that is in communication with the accommodating cavity; the top cover is disposed on the opening of the bottom case; the conductive element is disposed on the top cover by an insulating adhesive layer; and an edge of the conductive element is provided with at least one positioning gap.

In the case component for the battery according to the present application, the edge of the conductive element is provided with at least one positioning gap, which becomes an obvious mark. This brings convenience for CCD visual positioning and detection in the battery production process, thereby improving the quality of the produced batteries.

In a possible embodiment, the positioning gap includes a pair of grooves, and the grooves each are recessed from the edge of the conductive element to a center of the conductive element.

In a possible embodiment, the grooves have a depth of 0.05 mm-0.5 mm.

In a possible embodiment, the positioning gap further includes an end foot, and the pair of grooves are respectively located on both sides of the end foot.

In a possible embodiment, the edge of the conductive element is provided with two positioning gaps, and the two positioning gaps are disposed at opposite sides of the edge of the conductive element; or the edge of the conductive element is provided with four positioning gaps, and the four positioning gaps are evenly disposed at the edge of the conductive element.

In a possible embodiment, the bottom case includes a bottom wall and a side wall, a bottom end of the side wall is connected to the bottom wall, and the top cover is disposed on an up end of the side wall.

The present application further provides a battery including a battery cell and the above case component for the battery; the case component for the battery includes the case body and the conductive element; the battery cell is accommodated in the accommodating cavity of the case body; the battery cell has a first tab and a second tab; the conductive element is electrically connected to one of the first tab and the second tab; and the bottom case is electrically connected to the other one of the first tab and the second tab.

The present application further provides a material belt for processing the above case component for the battery; the material belt has a pair of leftover material members and a plurality of conductive element substrates connected between the pair of leftover material members; and an edge of each of the plurality of conductive element substrates is connected between the pair of leftover material members by connecting portions.

In a possible embodiment, a pre-cut punching line and a pair of grooves are disposed at a position where each conductive element substrate is connected with one connecting portion, and the pair of grooves are respectively located at both sides of the pre-cut punching line, and each groove is recessed from an edge of the conductive element substrate to a center of the conductive element substrate.

In a possible embodiment, the pair of leftover material members are each provided with a plurality of positioning holes, and the positioning holes on one of the pair of leftover material members are disposed opposite to the positioning holes on the other of the pair of leftover material members.

For the battery according to the present application, by disposing the positioning gap at the edge of the conductive element, the positioning gap becomes an obvious mark for the edge of the conductive element, which facilitates circumferential positioning of the conductive element on the top cover, facilitates circumferential positioning of the battery, and can accurately identify the direction and position of the battery. During the battery production process, it is convenient to rapidly identify the direction and position of the conductive element, so as to accurately position the battery. This brings convenience for the CCD visual positioning and detection in the battery production process.

The material belt for the battery according to the present application is configured to produce the above case component for the battery. Since the material belt provided is a sheet structure, the material belt has a pair of leftover material members and a plurality of conductive element substrates. When the material belt is subjected to a surface treatment, the plurality of conductive element substrates connected between the pair of leftover material members can be subjected to the surface treatment simultaneously. This achieves continuous production, and improves the efficiency of the surface treatment on the conductive element substrates, thereby improving the manufacturing efficiency of the battery, reducing labor intensity, and increasing the consistency of conductive elements produced.

Besides the above-described technical problems solved by the embodiments of the present application, the technical features constituting the technical solutions, and the advantageous effects brought by the technical features of the technical solutions, other technical problems solved by a case component for a battery, a battery, and a material belt according to the embodiments of the present application, other technical features contained in the technical solutions, and the advantageous effects brought by the technical features will be described in further detail in the embodiments.

### BRIEF DESCRIPTION OF DRAWINGS

In order to more clearly describe the technical solutions in the embodiments of the present application or in the prior art, the drawings needed to be used in the description of the embodiments or the prior art will be briefly introduced. Apparently, the drawings in the following description are some embodiments of the present application, and for those of ordinary skill in the art, other drawings can also be obtained according to these drawings without any creative effort.
FIG. 1 is a stereo structural schematic view of a battery according to an embodiment of the present application.
FIG. 2 is a structural top view of a battery according to an embodiment of the present application.
FIG. 3 is a cross-sectional view of a cross section A-A of FIG. 2 of the battery according to the embodiment of the present application.
FIG. 4 is a cross-sectional view of a cross section B-B of FIG. 2 of the battery according to the embodiment of the present application.
FIG. 5 is a cross-sectional view of another example of a battery according to an embodiment of the present application.
FIG. 6 is a structural schematic top view of a conductive element in a case component for a battery according to an embodiment of the present application.
FIG. 7 is a stereo structural schematic view of another example of a conductive element in a case component for a battery according to an embodiment of the present application.
FIG. 8 is a structural schematic top view of another example of a conductive element in a case component for a battery according to an embodiment of the present application.
FIG. 9 is a structural schematic view of a material belt according to an embodiment of the present application.
FIG. 10 is an enlarged view of a partial structure at B in FIG. 9 in the structure of the material belt according to the embodiment of the present application.
FIG. 11 is an enlarged view of a partial structure at C in FIG. 10 in the structure of the material belt according to the embodiment of the present application.
FIG. 12 is a structural schematic view of a case component for a battery according to an embodiment of the present application.
FIG. 13 is a flowchart of a method for manufacturing a battery according to an embodiment of the present application.

### Description of the reference numbers:

10 - case body;
11 - bottom case;
111 - bottom wall;
112 - side wall;
12 - top cover;
121 - through hole;
13 - accommodating cavity;
15 - case body insulating adhesive;
20 - material belt;
21 - leftover material member;
211 - connecting portion;
212 - pre-cut punching line;
22 - conductive element substrate;
23 - space area;
24 - positioning hole;
25 - groove;
30 - conductive element;
31 - positioning gap;
32 - end foot;
33 - injecting hole;
40 - battery cell;
41 - first tab;
42 - second tab;
50 - insulating adhesive layer;
60 - sealing member.

### DESCRIPTION OF EMBODIMENTS

In order to make those skilled in the art better understand the solutions of the present invention, the present invention will be further described in detail below.

In the conventional way of battery production process, battery top covers are usually produced in single pieces. On one hand, it results in low production efficiency of batteries; on the other hand, the consistency of the produced battery top covers is difficult to ensure. Also, a conventional conductive element 30 is a circular sheet structure, and after the conductive element 30 is mounted to a battery, the identifiability of the battery in circumferential direction is low. This makes the realization of CCD visual positioning and detection difficult. Therefore, it is hard to rapidly and accurately position the battery in the battery production process.

In view of the above background, a case component for a battery, a battery, and a material belt are provided in the present application. By providing at least one positioning gap 31 at an edge of the conductive element 30, the CCD visual positioning on the battery can be rapidly and accurately performed and the battery detection is easy, which improves the production quality and production efficiency of the battery. By providing a material belt 20 with a plurality of conductive element substrates 22, the continuous production of the battery is achieved, which improves the production efficiency of the battery.

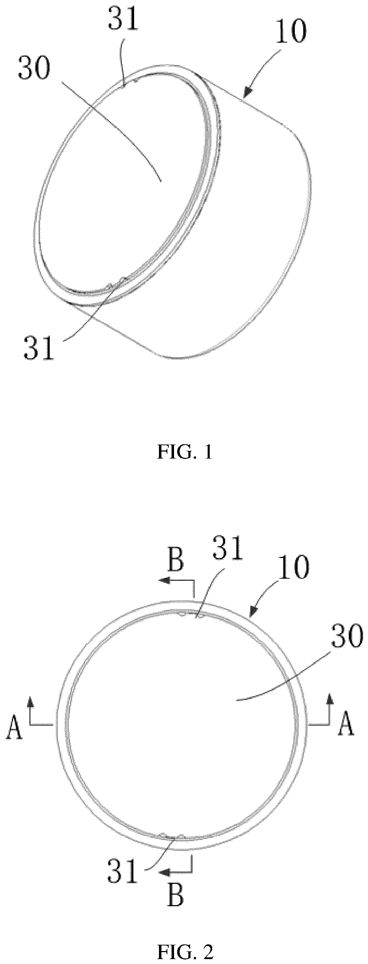

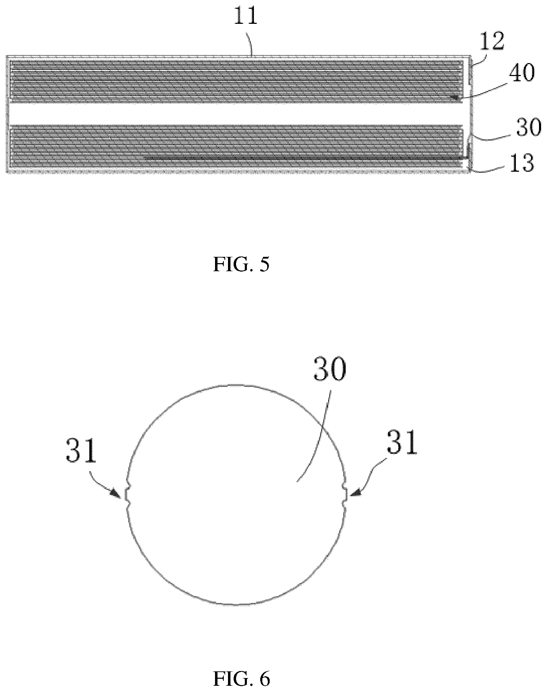

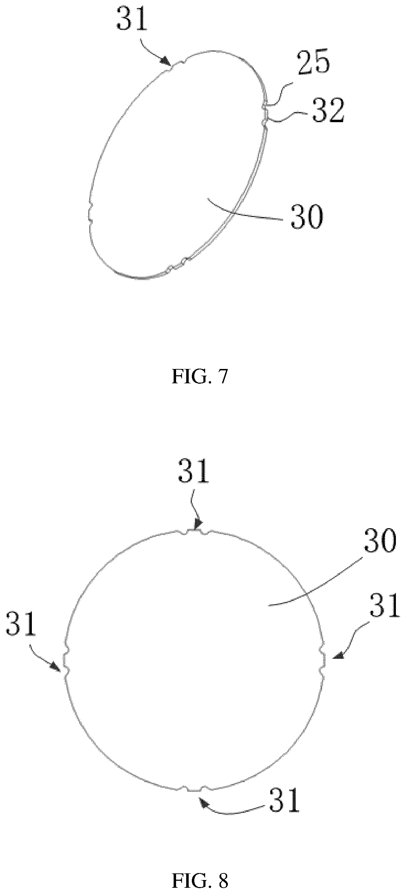

Referring to FIG. 1, FIG. 2, and FIG. 3, the present application provides a case component for a battery for accommodating a battery cell 40, including a case body 10, the battery cell 40, and a conductive element 30; the case body 10 includes a bottom case 11 and a top cover 12; an accommodating cavity 13 is in the case body 10; one end of the bottom case 11 has an opening that is in communication with the accommodating cavity 13; the top cover 12 is disposed on the opening of the bottom case 11; the conductive element 30 is disposed on the top cover 12 by an insulating adhesive layer 50. Referring to FIG. 6 and FIG. 7, an edge of the conductive element 30 is provided with at least one positioning gap 31.

The positioning gap 31 is configured for CCD (charge-couple-ddevice, CCD) visual positioning and detection. The arrangement of the positioning gap 31 can ensure accurate upper and lower positions of the battery, and avoid the battery cell 40 in a certain direction from being in contact with the bottom case 11 due to the eccentricity of the battery cell 40, thereby improving the quality of the battery.

Referring to FIG. 6 and FIG. 7, in a possible embodiment, the positioning gap 31 includes a pair of grooves 25, and the groove 25 is recessed from the edge of the conductive element 30 to a center of the conductive element 30. The center of the conductive element 30 refers to the geometric center of the conductive element 30.

In a possible embodiment, the groove 25 has a depth of 0.05 mm-0.5 mm. The depth of the groove 25 refers to the distance of the recess from the edge of the conductive element 30 to the center of the conductive element 30.

In a possible embodiment, the groove 25 has a depth of 0.05 mm or 0.5 mm. It is easy to understand that the depth of the groove 25 being too small will affect the effect of visual positioning, resulting in a non-obvious effect of visual positioning, and the depth of the groove 25 being too large will affect the strength of the conductive element 30, resulting in the problem that the warping of the edge of the conductive element 30 is easy to occur after the conductive element 30 is punched off from the material belt 20. In this embodiment, the groove 25 has a depth of 0.05 mm-0.5 mm, which can not only play an obvious visual positioning effect, but also ensure that the conductive element 30 remains good flatness after the conductive element 30 is punched off from the material belt 20.

In a possible embodiment, the conductive element 30 is a circular structure. Of course, the conductive element 30 is not limited to the circular structure, but can also be a square, an elliptical structure, which is not specifically limited herein.

The edge of the conductive element 30 has an obvious mark by setting the groove 25. This facilitates circumferential positioning of the conductive element 30 on the top cover 12 and facilitates circumferential positioning of the battery, thereby accurately identifying the direction and position of the battery. During the battery production process, the accurate positioning of the battery cell 40 is achieved, and the positioning rate is fast, and the production quality and production efficiency of the battery is improved. Especially for the conductive element 30 of a circular structure, it is convenient to quickly identify the direction and position of the conductive element 30, so as to accurately position the battery. This brings convenience for the CCD visual positioning and detection in the battery production process.

In a possible embodiment, the positioning gap 31 further includes an end foot 32, and the pair of grooves 25 are respectively located on both sides of the end foot 32. This makes the positioning gap 31 at the edge of the circular conductive element 30 clearly distinguishable from other portions of the edge of the conductive element 30, thereby improving the identifiability of the positioning gap 31 and improving the effect of the CCD visual positioning and detection.

Referring to FIG. 6, in a possible embodiment, the edge of the conductive element 30 is provided with two positioning gaps 31, and the two positioning gaps 31 are disposed at opposite sides of the edge of the conductive element 30. Specifically, when the center of the conductive element 30 is took as a center of a circle, the angle between the two positioning gaps 31 is 180°.

Referring to FIG. 8, in a possible embodiment, the edge of the conductive element 30 is provided with four positioning gaps 31, and the four positioning gaps 31 are evenly disposed at the edge of the conductive element 30 in equal intervals. Specifically, when the center of the conductive element 30 is took as a center of a circle, the angle between two adjacent positioning gaps 31 is 90°.

In a possible embodiment, the edge of the conductive element 30 is provided with a plurality of positioning gaps 31, the plurality of positioning gaps 31 are evenly disposed at the edge of the conductive element 30 in equal intervals, and the number of the positioning gaps 31 may be 3, 6, etc.

Aluminum or aluminum alloy materials may be used for the conductive element 30.

The bottom case 11 and the top cover 12 are not limited to be made of steel, and they can be made of materials such as nickel alloy, copper, etc. The cross-sectional shape of the bottom case 11 may be circular, of course, the cross-sectional shape of the bottom case 11 may also be elliptical.

The conductive element 30 is disposed on the top cover 12 by an insulating adhesive layer 50, which makes insulated seal between the conductive element 30 and the top cover 12.

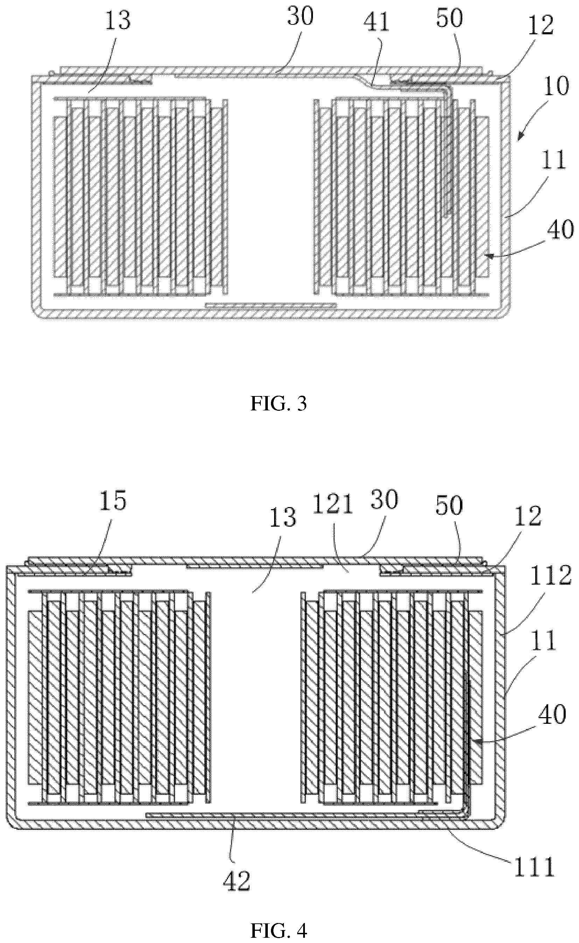

Referring to FIGs. 3 and 4, the insulating adhesive layer 50 is in the shape of a circular ring. Of course, the insulating adhesive layer 50 may be formed after the solidification of an insulating adhesive, and the conductive elements 30 may also be bonded to the top cover 12 by the insulating adhesive layer 50 by a heating and pressuring way. This improves solidity of the bonding between the conductive element 30 and the top cover 12, and ensures the insulation and sealing effects between the conductive element 30 and the top cover 12.

Referring to FIGs. 4 and 5, the present application further provides a battery including a battery cell 40 and the above case component for the battery; the case component for the battery includes the case body 10 and the conductive element 30; the battery cell 40 is accommodated in the accommodating cavity 13 of the case body 10.

Referring to FIGs. 3 and 4, the battery cell 40 has a first tab 41 and a second tab 42; the conductive element 30 is electrically connected to one of the first tab 41 and the second tab 42; and the bottom case 11 is electrically connected to the other one of the first tab 41 and the second tab 42. The electrical energy generated from the battery cell 40 is outputted outwardly through the bottom case 11 and the conductive element 30 to supply electrical energy for an external electrical equipment.

It is easy to understand that one of the first tab 41 and the second tab 42 is a positive electrode tab, and the other one of the first tab 41 and the second tab 42 is a negative electrode tab.

In a possible embodiment, the conductive element 30 is electrically connected to the positive electrode tab, and the bottom case 11 is electrically connected to the negative electrode tab.

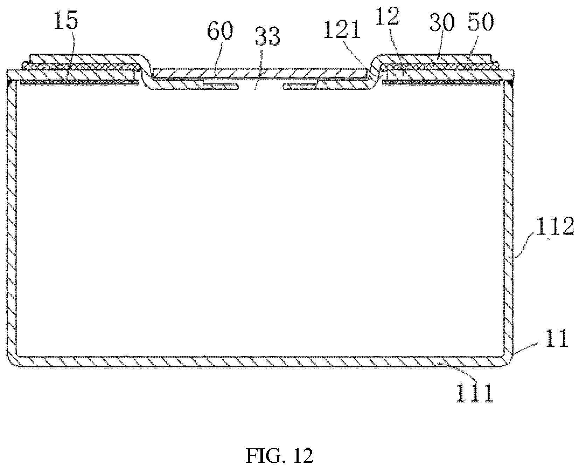

Referring to FIG. 12, in a possible embodiment, the bottom case 11 includes a bottom wall 111 and a side wall 112, the side wall 112 is disposed around the bottom wall 111, a bottom end of the side wall 112 is connected to the bottom wall 111, the top cover 12 is disposed on an top end of the side wall 112, and the bottom wall 111 may become one end surface of the case body 10, so that the bottom case 11 becomes an open structure having an opening at one end. The inside of the bottom case 11 has an accommodating cavity 13 for the battery cell 40 to be easily mounted in the accommodating cavity 13. The top cover 12 is lid on the accommodating cavity 13, and the top cover 12 may be the other end surface of the case body 10.

The side wall 112 and the bottom wall 111 may be formed as a non-detachable whole by simultaneous machine-shaping, or the side wall 112 and the bottom wall 111 may be separately processed, and then joined together by welding or other processes to form a sealing structure.

In one possible embodiment, the top cover 12 is provided with a through hole 121, the through hole 121 may be located at the center position of the top cover 12, the conductive element 30 is capped on the through hole 121, the outer diameter of the conductive element 30 is smaller than the outer diameter of the top cover 12, and the outer diameter of the conductive element 30 is larger than the outer diameter of the through hole 121 opened at the center of the top cover 12.

The conductive element 30 is in insulated connection with the top cover 12. For example, an insulating adhesive layer 50 may be disposed between the conductive element 30 and the top cover 12, and the conductive element 30 is in insulated bond with the top cover 12 by the insulating adhesive layer 50.

The insulating adhesive layer 50 may be formed by solidification of a PP polypropylene adhesive. The PP polypropylene adhesive, heated to be in a hot melt state, makes the conductive element 30 and the top cover 12 in sealing connection, and the PP polypropylene adhesive is solidified to become the insulating adhesive layer 50.

In a possible embodiment, the conductive element 30 is also provided with an injecting hole 33, the injecting hole 33 may be located at the center position of the conductive element 30. After the conductive element 30 is capped on the through hole 121, the injecting hole 33 is located directly above the through hole 121, and the injecting hole 33 and the through hole 121 are communicated with each other to facilitate the injection of an electrolytic solution into the accommodating cavity 13 through the injecting hole 33. A sealing member 60 is also welded on the conductive element 30, and the sealing member 60 is configured to cover the injecting hole 33 after the injection of the electrolytic solution.

A case body insulating adhesive 15 may also be attached to the inner wall of the top cover 12 facing to the accommodating cavity 13. The case body insulating adhesive 15 may be formed of a non-metallic insulating material, and may have a thickness of 0.02-0.1 mm, for example 0.03-0.05 mm. The case body insulating adhesive 15 is configured to provide insulation between the top cover 12 and the battery cell 40.

It is easy to understand that the accommodating cavity 13 of the bottom case 11 is filled with the electrolytic solution, and the battery cell 40 is immersed in the electrolytic solution.

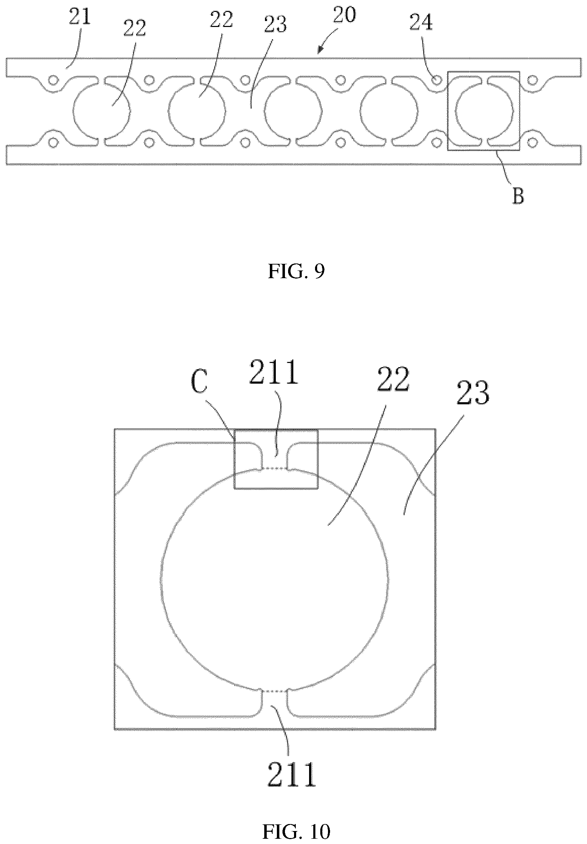

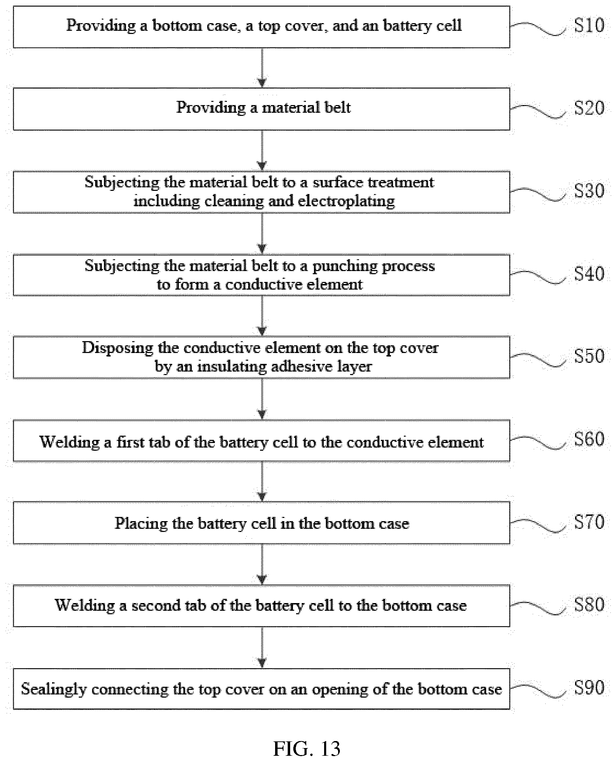

Referring to FIG. 13, the present application further provides a method for manufacturing a battery, for manufacturing the above battery, including the following steps:
S 10, providing a bottom case 11, a top cover 12, and an battery cell 40;
S20, providing a material belt 20, referring to FIG. 9, the material belt 20 has a pair of leftover material members 21 and a plurality of conductive element substrates 22, and both sides of the edge of each of the plurality of conductive element substrates 22 are respectively connected between the pair of leftover material members 21 by connecting portions 211;
S30, subjecting the material belt 20 to a surface treatment including cleaning and electroplating;
S40, subjecting the material belt 20 to a punching process to form a conductive element 30;
S50, disposing the conductive element 30 on the top cover 12 by an insulating adhesive layer 50;
S60, welding a first tab 41 of the battery cell 40 to the conductive element 30;
S70, placing the battery cell 40 in the bottom case 11;
S80, welding a second tab 42 of the battery cell 40 to the bottom case 11;
S90, sealingly connecting the top cover 12 on an opening of the bottom case 11.

In the method for manufacturing the battery according to the present example, since the material belt 20 provided is a sheet structure, the material belt 20 has the pair of leftover material members 21 and a plurality of conductive element substrates 22. When the material belt 20 is subjected to the surface treatment, the plurality of conductive element substrates 22 connected between the pair of leftover material members 21 can be subjected to the surface treatment simultaneously. This achieves continuous production, and improves the efficiency of the surface treatment on the conductive element substrates 22, thereby improving the manufacturing efficiency of the battery, reducing labor intensity, and increasing the consistency of produced conductive elements 30.

The material belt 20 has the pair of leftover material members 21 and the plurality of conductive element substrates 22, and the number of conductive element substrates 22 may be set according to the length of the material belt 20 and the size of the conductive element substrates 22, which is not limited herein.

In the step S30, the material belt 20 is subjected to the surface treatment including cleaning and electroplating, where the cleaning to the material belt 20 may be wiping-cleaning to the surface of the material belt 20 using a cleaning solution. Since the material belt 20 has the pair of leftover material members 21 and the plurality of conductive element substrates 22, one-step cleaning to surfaces of the plurality of conductive element substrates 22 can be achieved. This achieves fast cleaning and increases production efficiency. The electroplating on the surface of the material belt 20 may be subjecting surfaces of the plurality of conductive element substrates 22 to electroplating at a time, which is convenient for the rapidly performance of electroplating on the surface of the material belt 20, thereby improving production efficiency.

In the step S50, the conductive element 30 is disposed on the top cover 12 by the insulating adhesive layer 50, where the conductive element 30 is bonded on the top cover 12 by the insulating adhesive layer 50, so that a closed accommodating cavity 13 is formed inside the bottom case 11 and the top cover 12. Since there are fewer places that need to seal, it is relatively easy to seal, and a better sealing performance can be obtained. The conductive element 30 is disposed on the top cover 12 by the insulating adhesive layer 50, the top cover 12 and the conductive element 30 are completely separated by the insulating adhesive layer 50, thereby ensuring the insulating effect between the top cover 12 and the conductive element 30.

In a possible embodiment, the conductive elements 30 may be bonded to the top cover 12 by the insulating adhesive layer 50 by a heating and pressuring way, which improves the solidity of bonding between the conductive element 30 and the top cover 12, and ensures the insulation and sealing effects between the conductive element 30 and the top cover 12.

It is easy to understand that the battery cell 40 has the first tab 41 and the second tab 42; the conductive element 30 is electrically connected to one of the first tab 41 and the second tab 42; and the bottom case 11 is electrically connected to the other one of the first tab 41 and the second tab 42. The electrical energy generated on the battery cell 40 is outputted outwardly through the bottom case 11 and the conductive element 30 to supply electrical energy for an external electrical equipment. One of the first tab 41 and the second tab 42 is a positive electrode tab, and the other one of the first tab 41 and the second tab 42 is a negative electrode tab.

In the step S50, the first tab 41 of the battery cell 40 is welded to the conductive element 30, the first tab 41 may be a positive electrode tab, and the positive electrode tab is welded to the conductive element 30.

In the step S80, the second tab 42 of the battery cell 40 is welded to the bottom case 11, the second tab 42 may be a negative electrode tab, and the negative electrode tab is welded to the bottom case 11.

In the step S70, the battery cell 40 is placed in the bottom case 11, specifically, the battery cell 40 is placed in the accommodating cavity 13 in the bottom case 11.

In the step S90, the top cover 12 is sealingly connected on the opening of the bottom case 11, where the top cover 12 may be connected to the bottom case 11 using a welding method.

In a possible embodiment, in the step S40, the punching process on the material belt 20 includes: performing punching along a pre-cut punching line 212 between the conductive element substrate 22 and the connecting portion 211. The groove 25 retains as a withdrawing notch after the punching, and after the material belt 20 is subjected to the punching process, the conductive element substrate 22 is cut off from the material belt 20 to become a conductive element 30.

In a possible embodiment, the pre-cut punching line 212 is in a circular arc shape, and the pre-cut punching line 212 is in a smooth transition along the edge of the conductive element substrate 22.

Referring to FIG. 9, the present application further provides a material belt, the material belt is configured to process the above case component for the battery. The material belt 20 has a pair of leftover material members 21 and a plurality of conductive element substrates 22 connected between the pair of leftover material members 21; and the edge of each of the plurality of conductive element substrates 22 is connected between the pair of leftover material members 21 by connecting portions 211.

For the material belt according to the present application, since the material belt has the pair of leftover material members 21 and the plurality of conductive element substrates 22 connected between the pair of leftover material members 21, the continuous production of the conductive element 30 becomes possible. This greatly improves the production efficiency of batteries, and improves the consistency of the produced batteries.

The leftover material members 21 may be a strip-shaped structure, and there may be at least one space area 23 between adjacent two conductive element substrates 22.

Referring to FIGs. 9 and 10, in a possible embodiment, the edge of each of the conductive element substrates 22 is connected between the pair of leftover material members 21 by a pair of connecting portions 211, and there is one space area 23 between adjacent two conductive element substrates 22.

In a possible embodiment, the edge of each of the conductive element substrates 22 is connected between the pair of leftover material members 21 by a pair of connecting portions 211, and adjacent two conductive element substrates 22 are connected by one connecting portion 211, there are two space areas 23 between adjacent two conductive element substrates 22.

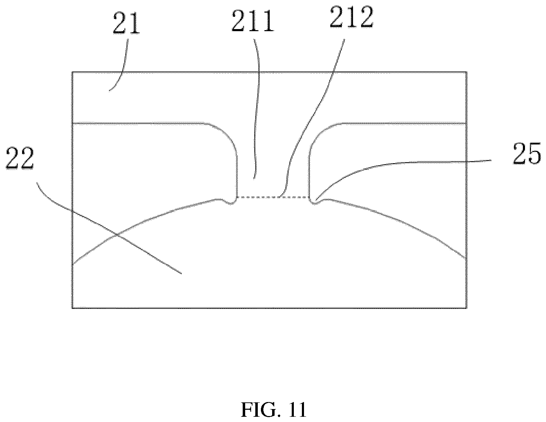

Referring to FIGs. 10 and 11, there is a pre-cut punching line 212 and a pair of grooves 25 at a position where the conductive element substrate 22 is connected to a connecting portion 211, and the pair of grooves 25 are respectively located at both sides of the pre-cut punching line 212, and the groove 25 is recessed from the edge of the conductive element substrate 22 to the center of the conductive element substrate 22.

The groove 25 may be in a circular arc shape, and the groove 25 may be a withdrawing notch. When the pre-cut punching line 212 between the connecting portion 211 and the conductive element substrate 22 is subjected to the punching process, the quality of the punched conductive element 30 that has been subjected to the punching process can be ensured.

Referring to FIG. 9, the pair of leftover material members 21 each are provided with a plurality of positioning holes 24, and the positioning holes 24 on one of the pair of leftover material members 21 are disposed opposite to the positioning holes 24 on the other of the pair of leftover material members 21. The positioning hole may be a circular hole, and a pair of positioning holes 24 may be located at both sides of the conductive element substrate 22 respectively, or may be located at both sides of the space area 23 between adjacent two conductive element substrates 22.

It should be noted here that the numerical value and numerical range involved in the present application are approximate values. Due to the influence of the manufacturing process, there may be errors in a certain range, which may be considered ignorable for persons of oidinary skill in the art.

In the description of the present application, it is to be understood that the terms "center", "length", "width", "thickness", "top end", "bottom end", "up", "down", "left", "right", "front", "rear", "vertical", "horizontal", "inside", "outside", "axial direction", "circumferential direction", etc. indicating directional or positional relationship are based on the directional or positional relationship shown in the drawings. These terms are intended to facilitate the description of the present application and simplify the description, rather than indicate or imply that the positions or components indicated must have a specific direction, a specific construction and operation, and therefore cannot be understood as a limit to the present application.

Moreover, the terms "first", "second" are used only for the purpose of description, and cannot be understood as indicating or implying relative importance, or implicitly indicating the number of the indicated technical features. Accordingly, a feature defined with "first" or "second" may expressly or impliedly include one or more the features. In the description of the present application, the meaning of "a plurality of" is at least two, for example two, three, etc., unless otherwise specifically defined.

In the present application, unless otherwise specifically specified and defined, the terms "mount", "communicate", "connect", "fix", etc. should be understood broadly. For example, the terms may be understood as fixedly connecting, or detachably connecting, or forming as a whole, and may be understood as mechanically connecting, or electrically connecting or being able to communicate with each other, and may be understood as directly connecting, or indirectly connecting through an intermediate medium, or may be understood as making two elements internally communicate, or making two elements have an interaction relationship. For persons of ordinary skill in the art, the specific meanings of the above terms in the present application can be understood according to the specific circumstances.

In the present application, unless otherwise specifically specified and defined, a first feature being "above" or "below" a second feature may include that the first and second features are direct contacted, and may also include that the first and second features are not direct contacted, but contacted through another feature therebetween. Moreover, the first feature being "on", "up", and "above" the second feature includes that the first feature is directly above and obliquely above the second feature, or only means that the first feature has a level height higher than the second feature. The first feature being "under", "down", and "below" the second feature includes that the first feature is directly below and obliquely below the second feature , or only means that the first feature has a level height lower than the second feature.

Finally, it should be noted that the foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent substitutions to some or all technical features thereof. These modifications or substitutions do not make the essence of the corresponding technical solutions depart from the scope of the technical solutions of embodiments of the present application.

## Claims

1. A case component for a battery for accommodating a battery cell (40), comprising a case body (10) and a conductive element (30), and the case body (10) comprises a bottom case (11) and a top cover (12); an accommodating cavity (13) is in the case body (10); one end of the bottom case (11) has an opening that is in communication with the accommodating cavity (13); the top cover (12) is disposed on the opening of the bottom case (11); the conductive element (30) is disposed on the top cover (12) by an insulating adhesive layer (50); and an edge of the conductive element (30) is provided with at least one positioning gap (31).

2. The case component for the battery according to claim 1, wherein the positioning gap (31) comprises a pair of grooves (25), and the grooves (25) each are recessed from the edge of the conductive element (30) to a center of the conductive element (30).

3. The case component for the battery according to claim 2, wherein the grooves (25) have a depth of 0.05 mm-0.5 mm.

4. The case component for the battery according to claim 2, wherein the positioning gap (31) further comprises an end foot (32), and the pair of grooves (25) are respectively located on both sides of the end foot (32).

5. The case component for the battery according to any one of claims 1-4, wherein the edge of the conductive element (30) is provided with two positioning gaps (31), and the two positioning gaps (31) are disposed at opposite sides of the edge of the conductive element (30); or
the edge of the conductive element (30) is provided with four positioning gaps (31), and the four positioning gaps (31) are evenly disposed at the edge of the conductive element (30).

6. The case component for the battery according to any one of claims 1-4, wherein the bottom case (11) comprises a bottom wall (111) and a side wall (112), a bottom end of the side wall (112) is connected to the bottom wall (111), and the top cover (12) is disposed on an top end of the side wall (112).

7. A battery comprising a battery cell (40) and the case component for the battery of any one of claims 1-6, and the case component for the battery comprises the case body (10) and the conductive element (30); the battery cell (40) is accommodated in the accommodating cavity (13) of the case body (10); the battery cell (40) has a first tab (41) and a second tab (42); the conductive element (30) is electrically connected to one of the first tab (41) and the second tab (42); and the bottom case (11) is electrically connected to the other one of the first tab (41) and the second tab (42).

8. A material belt for processing the case component for the battery of any one of claims 1-6, and the material belt (20) has a pair of leftover material members (21) and a plurality of conductive element substrates (22) connected between the pair of leftover material members (21); and an edge of each of the plurality of conductive element substrates (22) is connected between the pair of leftover material members (21) by connecting portions (211).

9. The material belt according to claim 8, wherein a pre-cut punching line (212) and a pair of grooves (25) are disposed at a position where each conductive element substrate (22) is connected with one connecting portion (211), and the pair of grooves (25) are respectively located at both sides of the pre-cut punching line (212), and each groove (25) is recessed from an edge of the conductive element substrate (22) to a center of the conductive element substrate (22).

10. The material belt according to claim 9, wherein the pair of leftover material members (21) are each provided with a plurality of positioning holes (24), and the positioning holes (24) on one of the pair of leftover material members (21) are disposed opposite to the positioning holes on the other of the pair of leftover material members (21).
